# EUROPÄISCHE PATENTSCHRIFT

(11) **EP 0 671 618 B1**
(45) Veröffentlichungstag und Bekanntmachung des Hinweises auf die Patenterteilung: **14.04.1999**
(21) Anmeldenummer: 95810040.6
(22) Anmeldetag: 23.01.1995
(51) Int. Cl.: G01M 15/00, G01L 23/10, F04B 51/00

(54) **Kolben-Motoren und -Kompressoren mit Überwachungsanlage**
Piston engines and compressors with monitoring system
Moteurs et compresseurs à piston avec système de surveillance

(30) Priorität: 10.02.1994 CH 391/94
(43) Veröffentlichungstag der Anmeldung: 13.09.1995
(73) Patentinhaber: K.K. HOLDING AG, CH-8408 Winterthur (CH)
(72) Erfinder: Engeler, Paul, CH-8500 Frauenfeld (CH); Meier, Walter, D-79801 Hohentengen (DE); Sonderegger, Christoph, CH-8413 Neftenbach (CH); Tolsma, Eduard, CH-8494 Bauma (CH)

(56) Entgegenhaltungen:
- EP-A- 0 079 042
- EP-A- 0 170 256
- EP-A- 0 175 449
- EP-A- 0 459 948
- DE-A- 2 647 470
- US-A- 3 487 640

## Beschreibung

Die Erfindung betrifft einen mehrzylindrigen Kolben-Motor oder-Kompressor mit einer Überwachungsanlage bestehend aus Längenänderungen erfassenden Sensoren, die den Zylinderdruckverläufen proportionale Messsignale ergeben und mit einer nachgeschalteten Verarbeitungselektronik verbunden sind.

Aus der EP-A-175449 ist eine Messanordnung für die Erfassung des Zylinderdrucks bei einem Kolbenmotor bekannt, bei der, ähnlich wie bei einem Membran-Drucksensor die Relativverschiebung einer Wand eines Bauteils, die mit dem Zylinderdruck belastet ist, zu einer zweiten, vom Zylinderdruck unbelasteten Wand des gleichen Bauteils erfasst wird. Bei einer nur relativ geringen Genauigkeit der gemessenen Zylinderdruckwerte ist vor allem die Proportionalität zwischen Messsignal und Zylinderdruck nicht gewährleistet.

In der EP-A-0459948 ist ein einschraubbares Dehnmesselement gezeigt, dessen Piezokristallsätze aus Quarzkristallen oder Piezokeramik bestehen.

Aufgabe der Erfindung ist es, eine Überwachung für Kolben-Motoren und -Kompressoren zu gewährleisten, die eine verbesserte Genauigkeit, vor allem hinsichtlich der Proportionalität, bei der Erfassung des Zylinderdrucks durch die Messung einer Längenänderung an einem Maschinenteil aufweist.

Diese Aufgabe wird mit der Erfindung durch die Merkmale im Anspruch 1 oder 2 gelöst.

Wenn konstruktiv möglich wird je ein Dehnmesselement im oberen Teil jedes Zylindereinsatzes eingebaut. Bei ungeeigneten Zylindereinsätzen muss das Dehnmesselement in einem Zylinderdeckelbolzen montiert werden. Damit kann die Ueberwachungsanlage entweder den Spitzendruck, den Verbrennungsdruckanstieg α oder den Kompressionsdruck als Messsignal verfolgen. Kalibrierung erfolgt während Volllastprüflauf, indem alle Messsignale auf gleichen Maximalwert abgeglichen werden. Mit Hilfe eines analogen Rechners wird nun von allen Messzyklen laufend der Mittelwert gebildet, der kurzzeitig festgehalten und mit den Einzelwerten verglichen wird. Sobald Einzelwerte ausserhalb eingestellter Grenzwerte auftreten, sog. Ausreisser, werden diese erkannt und entsprechende Alarmstufen ausgelöst. Die in der Erfindungvorhandene Ueberwachungsanlage ist modular anpassbar und für Dauerbetrieb geeignet, weil keine schwierig messbaren Gasdrücke erfasst werden müssen.

In zunehmendem Mass steht für die Ueberwachung solcher Anlagen kein qualifiziertes Personal mehr zur Verfügung, das eine gefährliche Veränderung des Betriebsgeschehens schnell genug feststellen und entsprechende Sofortmassnahmen einleiten kann.

Dadurch gehen infolge Unvorsichtigkeit und mangelhafter Wartung jährlich Millionenwerte verloren, die in vielen Fällen von Versicherungen gedeckt werden müssen.

Die Erfindung besticht durch ihre Einfachheit und Betriebssicherheit, hauptsächliche Anwendung wird sie in Diesel- und Gasmotoren, wie auch in Mehrzylinder Kolbenkompressoren für Gase oder Flüssigkeiten finden.

Anhand von Beispielen sollen die beiden Gruppen "Schiffsantriebe mit Mehrzylinder Dieselmotoren" sowie "Energieerzeugung mit Gasmotoren" näher dargestellt werden.

Schiffsantriebe z.B. für Fährbetrieb kennen praktisch nur drei Betriebszustände:
Leerlauf, Manövrierbetrieb, Vollast
wobei der Vollastbetrieb etwa 90% der Gesamtbetriebszeit beträgt. Die Antriebsaggregate solcher Schiffe sind meistens schnelllaufende 8- bis 16-Zylinderdieselmotoren von niedrigem Leistungsgewicht. Solche Dieselmotoren sind im Gegensatz zu langsam laufenden Hochsee-Schiffsmotoren meist nicht mit Indizierventilen ausgerüstet, d.h. der Zylinderdruck kann im Betrieb nicht gemessen werden.

Eine ähnliche Situation besteht bei Gasmotoren, die mit Erd- oder Biogas betrieben werden. Diese Motoren werden meist zur Energieerzeugung in Verbundkraftwerken eingesetzt. Wegen der Gefährlichkeit von Gasexplosionen bei Defekten müssen solche Anlagen ganz besonders zuverlässig überwacht werden, woran wiederum die Versicherungen ein hohes Interesse haben. Solche Gasmotoren sind ohne Indizierventile ausgerüstet, der Verbrennungsdruck kann hier im Betrieb aus Sicherheitsgründen nicht gemessen werden.

Die einfachste und heute noch verwendete Messgrösse zur Ueberwachung ist die Abgastemperatur der einzelnen Zylinder, eine seit Jahrzehnten bekannte Methode. Vor allem bei Hochleistungsmotoren können jedoch Betriebszustände entstehen, z.B. durch Kolbenringbrüche oder Kolbenfresser, welche durch Aenderung der Abgastemperatur nicht schnell genug erkannt werden können. Eine Abschaltung erfolgt erst dann, wenn bereits erheblicher Schaden aufgetreten ist. Dies wäre besonders bei Gasmotoren äusserst gefährlich.

Eine sofort eingreifende Ueberwachung, die alle Betriebsunfälle in der notwendigen Reaktionszeit von Sekundenbruchteilen erkennt, kann nur mit Dauerüberwachung aller Zylinderdruckverläufe und mittels On-line Analyse der wichtigsten Messdaten erfolgen.

Die wichtigsten Werte des Verbrennungsablaufes im Zylinder sind:
- Kompressionsdruck
- Drucksteigerung α nach Verbrennungsbeginn
- Maximaldruck

Auf heutigen Prüfstandsmotoren ist es möglich, Ist- und Sollwerte solcher Messwerte für jeden Verbrennungstakt in jedem Zylinder exakt zu verfolgen und Abweichungen sofort anzuzeigen.

Dazu sind jedoch zuverlässige meist wassergekühlte Senscren für die Druckerfassung im Zylinder üblich, die an komplexe Computeranlagen angeschlossen wurden.

Für Dauerbetrieb in der Praxis sind solche Anlagen nicht geeignet.

Zweck der Erfindung ist eine einfache absolut zuverlässige Ueberwachungsanlage.

Kennzeichnend für die Erfindung ist die Wahl des Ortes für die Erfassung des Zylinderdruckes, der wie erwähnt, nicht an einem Indizierventil abgegriffen werden kann. Als Ersatz für diesen Hauptmesswert dient eine mechanische Grösse, die genau proportional der gasdynamischen Grösse des Zylinderdruckes ist. Diese mechanische Grösse ist die Dehnung in einem Maschinenteil, die mit weit grösserer Zuverlässigkeit erfasst werden kann, als eine gasdynamische Druckgrösse, die nur an schwer zugänglicher Stelle des Motors gemessen werden kann, wo zudem hohe Temperaturen herrschen.

Erfindungsgemäss kann die genaueste druckproportionale Dehnung am zuverlässigsten im oberen Teil des Zylindereinsatzes gemessen werden. Ist dies konstruktiv nicht möglich, so erfolgt der Einbau des Messelementes im Zylinderdeckelbolzen.

Als zuverlässigstes Messprinzip für schnell varierende Kräfte oder Dehnungen ist die Piezomesstechnik bekannt. Dazu werden auf Druck beanspruchte Piezokristalle an geeigneten Stellen der Dehnmesselemente eingebaut. Hierfür eignen sich Einkristalle wie z.B. Quarzkristall oder keramische Piezokristalle. Es ist aber auch möglich, Dehnmesselemente auf Silizium-Basis oder in Dünnfilmtechnik oder in der kapazitiven Technik zu verwenden.

Ein weiterer und ausschlaggebender Teil eines Ausführungsbeispieles der Erfindung liegt in der Kalibrier- und Auswertemethode der Sensoren und deren Signale.

Die Kalibriermethode der Sensoren kann durchgeführt werden, ohne dass eine quantitative Messung des Gasdruckes z.B. in "bar" notwendig ist. Zu diesem Zweck werden die Spitzenwertsignale der einzelnen Zylinder bei Vollastbetrieb durch elektrische Einstellglieder im zentralen Signalverarbeitungskasten auf einen einheitlichen Wert gebracht.

Die Erfindung wird in den folgenden Figuren näher beschrieben:
- Fig. 1: zeigt einen Teilquerschnitt eines Zylinderdeckels mit Zylindereinsatz und Dehnmesselement.
- Fig. 2: zeigt den Grundriss von Fig. 1 mit eingesetztem Dehnmesselement.
- Fig. 3: zeigt eine Anordnung eines Dehnmesselements im Zylinderdeckelbolzen.
- Fig. 4: zeigt das Druckdiagramm eines Diesel-bzw. Gasmotors.
- Fig. 5: zeigt schematisch eine Ueberwachungsanlage für einen erfindungsgemässe Motor oder Kompressor.
- Fig. 6: zeigt ein Auswertebeispiel einer Ueberwachungsanlage für einen erfindungsgemässen Motor oder Kompressor.
- Fig. 7: zeigt ein Schaltschema einer Anlage für einen erfindungsgemässen Motor oder Kompressor.
- Fig. 8: zeigt den Verlauf von Spitzenwert-Signalen einzelner Zylinder.
- Fig. 9: zeigt den Lastabhängigen Verlauf des Mittelwertes mit Einzelsignalen.
- Fig. 10: zeigt ein elektronisches Funktionsschema einer erfindungsgemässen Anlage.

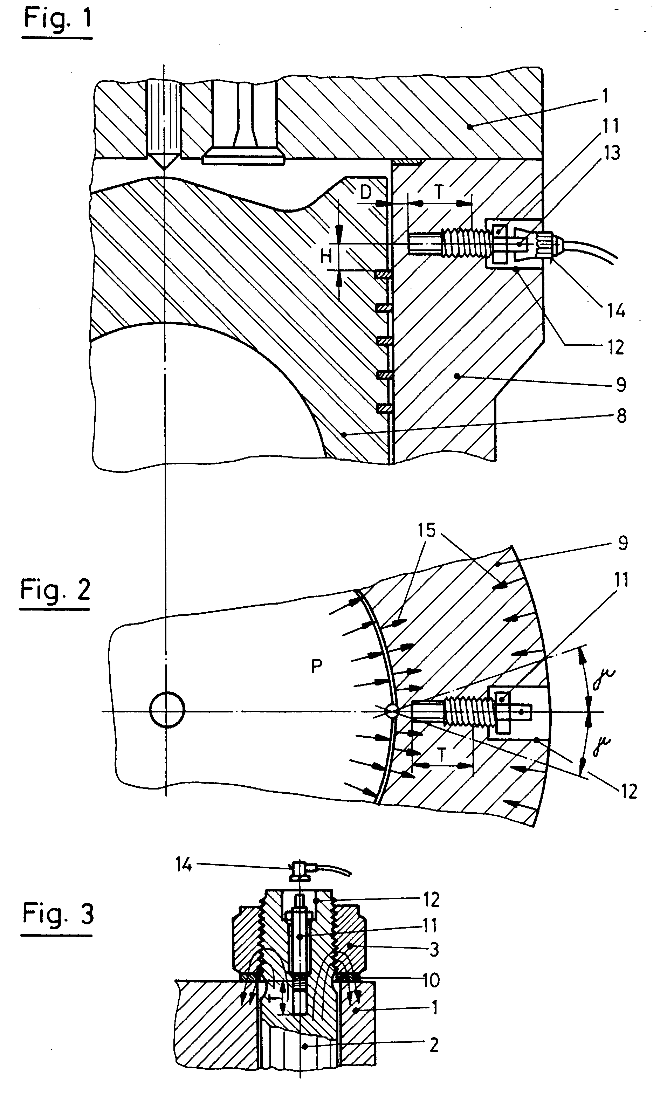

In Fig. 1 und 2 ist ein Teilquerschnitt eines Zylinderdeckels dargestellt. Dabei ist 1 der Zylinderdeckel, 8 der Kolben und 9 der Zylindereinsatz. Es kann sich dabei um einen Diesel-oder Gasmotor oder Kolbenkompressor handeln.

Im obern Teil des Zylindereinsatzes 9 z.B. um das Mass H oberhalb des obersten Kolbenrings bei o.T. Lage ist ein Dehnmesselement 11 in eine Bohrung 12 eingeschraubt, so dass es bei entferntem Stecker 14 vollständig versenkt und integrierender Teil des Zylindereinsatzes 9 ist. Die Dehnlänge T des Dehnmesselements 11 ist mit dem Sicherheitsabstand D von der Zylinderinnenfläche getrennt, so dass kein Gasdurchtritt möglich ist und auch keine Gefahr des Durchbrechens des Dehnmesselements 11 bei Montagevorspannung besteht. Je nach konstruktiven Bedingungen wird das Dehnmesselement 11 radial oder unter einem Sektorwinkel γ von bis zu ±30° eingebaut. Durch den Gasdruck p entstehen im Zylindereinsatz 9 Radialspannungen 15, die mit dem Dehnmesselement 11 proportional erfasst werden.

Fig. 3 zeigt eine an sich bekannte Anordnung, neu jedoch zum erfindungsgemässen Zweck. Die Kraftveränderungen werden direkt im Zylinderdeckelbolzen 2 gemessen mittels Dehnmesselement 11, das in der Bolzenachse eingesetzt ist. Die Dehnlänge T desselben ist unterhalb der Zylinderdeckeloberfläche positioniert, so dass alle Schraubenkräfte am Dehnteil beteiligt sind. Das Dehnmesselement 11 ist vorzugsweise mit einem Piezokristallsatz ausgerüstet wie auch mit einem integrierten Vorverstärker, der nicht gezeigt ist. Solche Dehnmesselemente werden z.B mit M10 Gewinde geliefert. Vorteilhaft ist es, das Dehnmesselement 11 versenkt im Zylinderdeckelbolzen 2 mittels geeigneter Montagebohrung 12 so unterzubringen, dass bei Demontage des Zylinderdeckels 1 nur der Stecker mit Kabel 14 entfernt werden muss und das Dehnmesselement geschützt im Bolzen 2 verbleibt.

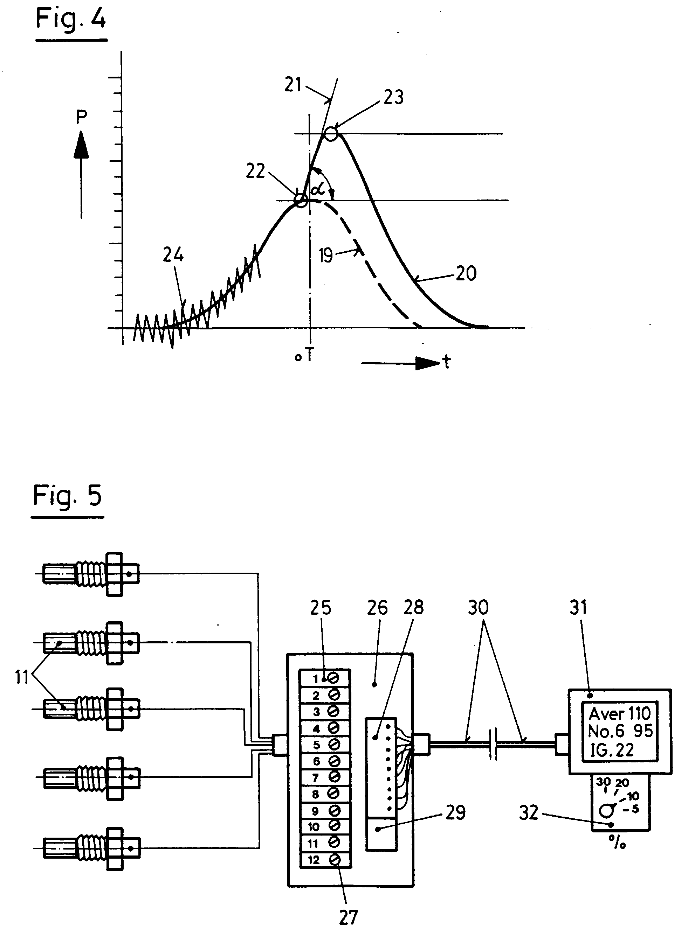

Fig. 4 zeigt ein dem Druckverlauf im Zylinder entsprechendes Messsignal. 19 ist der Kompressionsverlauf, 20 der Verbrennungsverlauf, 21 stellt die Drucksteigerung mit dem Gradienten α des Verbrennungsvorganges dar. In gewissen Motoren muss dieser Gradient α genau beobachtet und analysiert werden, was eine mögliche weitere Anwendung der Erfindung darstellen könnte, aber hier nur angedeutet bleibt. Eine weitere Messgrösse könnte der Kompressionsdruck 22 vor Verbrennungsbeginn sein. Ueblicherweise ist 23 der Spitzendruck, die weitaus wichtigste Messgrösse.

Fig. 5 zeigt schematisch die Ueberwachungsanlage für einen erfindungsgemässen Motor oder Kompressor.

Auf jedem Zylinder ist je ein Dehnmesselement 11 montiert, das über Leitungen mit dem Verstärkerkasten 26 verbunden ist. Dieser ist in Motornähe montiert. Der Verstärkerkasten 26 enthält die für jeden Zylinder vorgesehenen Signalverstärker 25, die mit Einstellelementen 27 versehen sind. Der Rechner bzw. die Folgeelektronik 28 bilden den Mittelwert aller Messsignale, der entsprechend der Motorbelastung laufend ändert. Die Uebertragungsleitung 30 bringt die Signalauswertung auf die im Steuerraum untergebrachte Anzeigetafel 31, auf welcher auch die Schalter 32 für die Alarmgrenzen untergebracht sind.

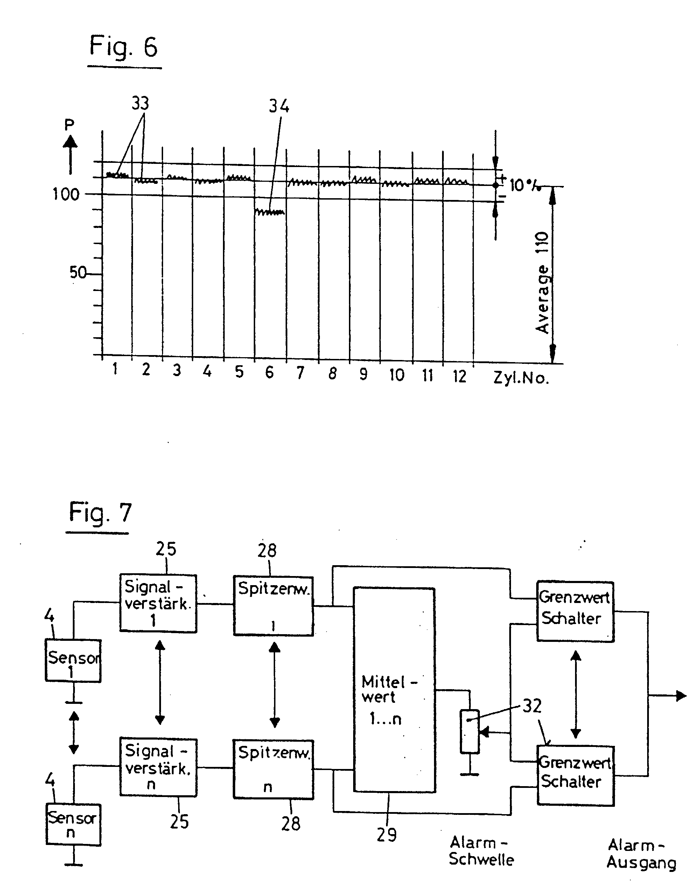

Fig. 6 zeigt ein Auswertebeispiel einer Ueberwachungsanlage für einen erfindungsgemässen Motor oder Kompressor schematisch vereinfacht, wobei 33 die Spitzendruckfolgen von Zylinder 1 und 2 sind und 34 jene von Zylinder 6. Die Werte von 34 liegen unter dem Schwellenband von z.B. ±10%. Diese Werte müssen sofort von der Automatik entdeckt und angezeigt werden. Je nach Einstellung des Grenzwertschalters 32 wird die Anlage nach wenigen Fehlzyklen automatisch abgeschaltet oder auf eine niedrigere Betriebsstufe gebracht.

Fig. 7 zeigt etwas ausführlicher wie die Signalaufbereitung erfolgt.

Jedem Dehnmesselement 11 ist ein Signalverstärker 25 und eine Spitzenwertspeicherschaltung 28 zugeordnet. Im Mittelwertblock 29 wird der Mittelwert der Signale der einzelnen Zylinder gebildet, und werden ihm Grenzwerte zugeordnet. Das aufgearbeitete Signal wird dann über die Leitung 30 zur Anzeigetafel 31 geführt.

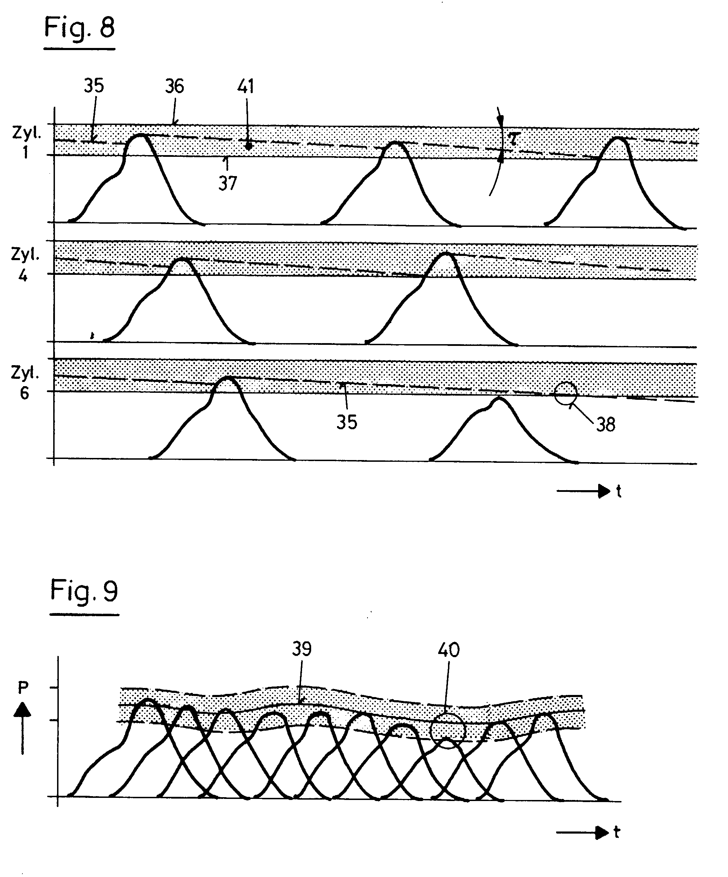

In Fig. 8 sind die im Rechner 28 bzw. Spitzenwertspeicherschaltung entstehenden Signale 35, die für jeden Zylinder separat verfolgt werden und die innerhalb gegebener Grenzwerte 36, 37 liegen, dargestellt. Sobald das Signal 35 einen Grenzwert z.B. 38 erreicht, wird ein Alarmsignal ausgelöst.

Fig. 9 zeigt den im Mittelwertblock 29 gebildeten last abhängigen Verlauf 39 des Mittelwertes 41. Ein unter der Grenze der Kurve 39 liegender Ausreisser 40 wird sofort erkannt.

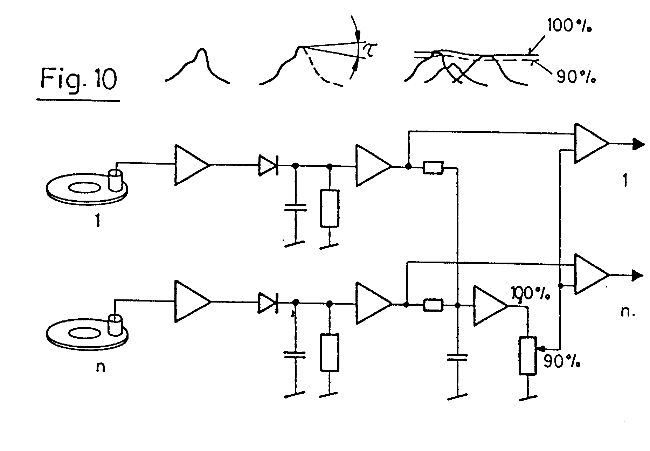

Fig. 10 zeigt die Schaltungsfunktion mit den elektrischen Symbolen, wie diese dem Fachmann verständlich sind. Das Signalverarbeitungsresultat ist über jeder Gruppe angegeben.

Durch die konsequente Anwendung an sich bekannter Mittel der analogen Rechentechnik ergibt sich ein erfindungsgemässes Ueberwachungssystem von aussergewöhnlicher Zuverlässigkeit und Einfachheit. Ohne die Notwendigkeit der absoluten Messung der Verbrennungsdrücke in den einzelnen Zylindern ist es möglich, mittels einer den thermischen und mechanischen Belastungen proportionalen Messgrösse eine Simultan-Ueberwachung der ganzen Motoranlage zu erreichen. Der dazu notwendige Sensor kann als Dehnmesselement 11 auf einfache und zuverlässige Weise auf jedem Zylinder montiert werden.

Kalibrierung und Justierung der einzelnen Messkanäle kann auf einfache Weise während eines Prüflaufes unter Vollast erfolgen, wobei alle Messsignale auf 100% gesetzt werden. Durch die kontinuierliche Erfassung aller Kennwerte und Bildung des last abhängigen Verlaufs des Mittelwertes ist der Gesamtmaschinenzustand laufend unter Kontrolle. Abweichungen einzelner Arbeitszyklen unter bzw. über die festgesetzten Grenzwerte werden sofort entdeckt und zur Anzeige gebracht. In einer zweiten Grenzwertstufe kann die Maschinenanlage automatisch sofort abgestellt werden.

Mit einer solchen Anlage ist die automatische Ueberwachung ohne eine komplexe Computeranlage möglich, wobei Betriebssicherheit erste Priorität erhält. Als Erweiterung des Erfindungsgedankens ist es aber auch möglich, die Signale der Ueberwachungsanlage in einen PC einzugeben und mit individuell angepasster Software weiter zu verarbeiten, insbesondere auch zur Maschinenbetriebs-Statistik zu verwenden. Auf diese Möglichkeiten soll hier nicht weiter eingegangen werden.

### Referenzliste

- 1: Zylinderdeckel
- 2: Zylinderdeckelbolzen
- 3: Schraubenmutter
- 8: Kolben
- 9: Zylindereinsatz
- 10: Normunterlagscheibe
- 11: Dehnmessschraube
- 12: Montagebohrung
- 13: Anschlussteil
- 14: Stecker mit Kabel
- T: Dehnlänge
- D: Sicherheitsabstand
- H: Montagehöhe
- 15: Radialspannungen
- p: Gasdruck
- 19: Kompressionsverlauf
- 20: Verbrennungsverlauf
- 21: Drucksteigerung mit Gradient α
- 22: Kompressionsdruck
- 23: Spitzendruck
- 25: Signalverstärker
- 26: Verstärkerkasten
- 27: Einstellelement
- 28: Rechner / Spitzenwertspeicherschaltung
- 29: Mittelwertblock
- 30: Uebertragungsleitung
- 31: Anzeigetafel
- 32: Grenzwerteinsteller
- 33: Spitzendrücke Zylinder 1,2
- 34: Spitzendrücke Zylinder 6
- 35: Gespeichertes Spitzendrucksignal
- 36: Oberer Grenzwert
- 37: Unterer Grenzwert
- 38: Alarm-Auslösewert
- 39: Hüllkurve (Mittelwerte der Spitzenwerte)
- 40: Ausreisser
- τ: Speicherzeitkonstante
- 41: Mittelwert

## Patentansprüche

1. Mehrzylindriger Kolben-Motor oder -Kompressor mit einer Überwachungsanlage bestehend aus Längenänderungen erfassenden Sensoren (11), die den Zylinderdruckverläufen proportionale Messsignale erzeugen und mit einer nachgeschalteten Verarbeitungselektronik (25-32) verbunden sind, dadurch gekennzeichnet, dass im Zylindereinsatz (9) jedes Zylinders oberhalb der o.T.-Lage des obersten Kolbenringes ein einschraubbares Dehnmesselement (11) unter einem Winkel ± γ so eingebaut ist, dass die gemessenen Materialdehnungen den vom Zylinderdruck herrührenden Radialspannungen möglichst genau proportional sind.

2. Mehrzylindriger Kolben-Motor oder -Kompressor mit einer Überwachungsanlage bestehend aus Längenänderungen erfassenden Sensoren (11), die den Zylinderdruckverläufen proportionale Messsignale erzeugen und mit einer nachgeschalteten Verarbeitungselektronik (25-32) verbunden sind, dadurch gekennzeichnet, dass, in der Bolzenachse eines Zylinderdeckelbolzens (2) integriert angeordnet, jedem Zylinder ein einschraubbares Dehnmesselement (11) zugeordnet ist, dessen Dehnungsteil (T) unterhalb der Zylinderdeckeloberfläche liegt, und dessen Messsignale möglichst genau den Zylinderdruckverläufen proportional sind.

3. Motor oder Kompressor nach Anspruch 1 oder 2, dadurch gekennzeichnet, dass die Verarbeitungselektronik (25-32) so ausgelegt ist, daß sie den Mittelwert der Messsignale aller Zylinder dauernd verfolgt, kurzzeitig festhält und mit Einzelwerten so vergleicht, dass deren eingestellte Grenzwertüber- bzw. -unterschreitung festgestellt und entsprechend der Alarmstufe in Befehlssignale umgewandelt wird.

4. Motor oder Kompressor nach einem der Ansprüche 1 bis 3, dadurch gekennzeichnet, dass als Messsignal der Gradient α des Verbrennungsanstiegs gewählt ist.

5. Motor oder Kompressor nach einem der Ansprüche 1 bis 3, dadurch gekennzeichnet, dass der Kompressionsenddruck (22) als Messsignal gewählt ist.

6. Motor oder Kompressor nach einem der vorhergehenden Ansprüche, dadurch gekennzeichnet, dass die Signalverstärker (25) der Verarbeitungselektronik mit Einstellelementen (27) so ausgerüstet sind, dass bei Vollastprüflauf alle Einzelsignale auf einfache Weise auf einheitlichen Signalpegel gebracht werden können.

7. Motor oder Kompressor nach einem der Ansprüche 1, 2 und 4 bis 6, dadurch gekennzeichnet, dass eine Spitzenwert-Speicherschaltung (28) mit einer Speicherzeitkonstante (τ) so ausgerüstet ist, dass der Messwert (35) jedes Zylinders bis zum nächsten Zyklus so gehalten wird, dass die Grenzwerte (36) und (37) unter normalen Betriebsbedingungen nicht erreicht werden, sondern erst nach Auftreten eines Ausreissers (40), wodurch bei Über- oder Unterschreiten (32) der eingestellten Grenzwerte ein Alarmsignal ausgelöst wird.

8. Motor oder Kompressor nach einem der Ansprüche 3 bis 6, dadurch gekennzeichnet, dass die Verarbeitungselektronik von den gespeicherten Spitzenwerten zu jedem Zeitpunkt den Mittelwert über alle Messzyklen bildet und mit einstellbaren Grenzwerten beaufschlagt, und dass sie ferner einen Ausreisser sofort erkennt und anzeigt bzw. Alarmsignale auslöst.

9. Motor oder Kompressor nach einem der vorhergehenden Ansprüche, dadurch gekennzeichnet, dass die Piezokristallsätze aus Silizium aufgebaut sind und statt des piezoelektrischen Effekts die dem Messwert proportionale Änderung des elektrischen Widerstandes oder der Kapazität zur Signalerfassung benützen.

## Claims

1. Multicylinder reciprocating engine or compressor with a monitoring system consisting of sensors (11) detecting length changes and generating measuring signals proportional to the cylinder pressure behaviour and connected to processing electronics (25-32), characterized by a screw-in extensometer (11) being fitted in the liner (9) of each cylinder above the top dead centre position of the uppermost piston ring at an angle ± γ so that the measured material elongations are as exactly proportional as possible to the radial stresses resulting from the cylinder pressure.

2. Multicylinder reciprocating engine or compressor with a monitoring system consisting of sensors (11) detecting length changes and generating measuring signals proportional to the cylinder pressure behaviour and connected to processing electronics (25-32), characterized by a screw-in extensometer (11) being placed in the axis of a cylinder cover stud (2) on each cylinder, its extension part (T) lying below the cylinder cover surface and its measuring signals being as exactly proportional as possible to the cylinder pressure behaviour.

3. Engine or compressor according to claims 1 or 2, characterized by the processing electronics (25-32) being designed so that the mean value of the measuring values from all cylinders is followed continuously, retained briefly and compared with the individual values so that any exceeding or understepping of the adjusted limits is detected and converted into command signals depending on the alarm level.

4. Engine or compressor according to one of claims 1 to 3, characterized by the gradient α of the combustion rise being selected as measuring signal.

5. Motor or compressor according to one of claims 1 to 3, characterized by the final compression pressure (22) being selected as measuring signal.

6. Engine or compressor according to one of the foregoing claims, characterized by the signal amplifiers (25) of the processing electronics being provided with adjustments (27) so that in a full-load test run all individual signals can be brought to a standard signal level in simple fashion.

7. Engine or compressor according to one of claims 1, 2 and 4 to 6, characterized by a peak value storage circuit (28) provided with storage time constant (τ) so that the measured value (35) from each cylinder is held till the next cycle, and the limits (36) and (37) are not reached under normal operating conditions but only after the occurrence of an outlier (40), which triggers an alarm signal if the adjusted limits are exceeded or understepped (32).

8. Engine or compressor according to one of claims 3 to 6, characterized by the processing electronics forming the mean value over all measuring cycles at any point in time from the stored peak values, with adjustable limits so that any outlier is detected at once and displayed or alarm signals given as the case may be.

9. Engine or compressor according to one of the foregoing claims, characterized by the piezoelectric crystal sets being assembled from silicon, using for signal generation the change of the electrical resistance or of the capacitance proportional to the measured value instead of the piezoelectric effect.

## Revendications

1. Moteur à piston ou compresseur multi-cylindres avec une installation de surveillance composée de capteurs (11) enregistrant les variations de longueur qui engendrent des signaux de mesure proportionnels aux évolutions de la pression dans le cylindre et qui sont reliés à une électronique de traitement (25-32) caractérisé en ce qu'une jauge de contrainte (11) munie d'un filetage est vissé, sous un angle ± γ dans le bloc-cylindre (g) de chaque cylindre au-dessus de la position du point mort haut du segment de piston supérieur de telle manière que les allongements de la matière mesurés soient exactement proportionnels aux contraintes radiales provoquées par la pression dans le cylindre.

2. Moteur à piston ou compresseur multi-cylindres avec une installation de surveillance composée de capteurs (11) enregistrant les variations de longueur qui engendrent des signaux de mesure proportionnels à l'évolution de la pression dans le cylindre et reliés à une électronique de traitement (25-32) caractérisé en ce qu'une jauge de contrainte (11) à visser aménagée intégratement dans l'axe longitudinale d'un goujon de culasse (2), est associée à chaque cylindre, sa partie sensible à l'allongement (T) se trouvant sous la face d'appui de la culasse et ses signaux de mesure étant le plus exactement possible proportionelle aux évolutions de la pression dans le cylindre.

3. Moteur ou compresseur selon revendication 1 ou 2 caractérisé en ce que l'électronique de traitement (25-32) surveille en permanence la valeur moyenne des signaux de mesure de tous les cylindres, les saisissent un court instant et les compare à des valeurs de mesure données de manière à ce que tout dépassement supérieur ou inférieur soit déterminé et transformé en signaux de commande conformément au niveau d'alarme.

4. Moteur ou compresseur selon l'une des revendications 1 à 3 caractérisé en ce que le gradient α de l'accroissement de la combustion est choisi comme signal de mesure.

5. Moteur ou compresseur selon l'une des revendications 1 à 3 caractérisé en ce que la pression en fin de compression (22) a été retenue comme signal de mesure.

6. Moteur ou compresseur selon l'une des revendication précédentes caractérisé en ce que les amplicateurs de signal (25) de l'électronique de traitement sont équipés d'éléments de réglage (27) de telle sorte que lors d'un essai à pleine charge tous les signaux individuels peuvent être amenés de façon simple à un niveau de signal homogène.

7. Moteur ou compresseur selon l'une des revendications 1, 2 et 4 à 6 caractérisé en ce qu'un circuit de mémorisation de valeur de pointe (28) avec une constante de temps de mémorisation (τ) est équipé de telle sorte que la valeur de mesure (35) de chaque cylindre est saisie jusqu'au prochain cycle, que les valeurs limites (36) et (37) ne sont pas atteintes sous des conditions de fonctionnement normales mais uniquement lors de l'apparition d'une valeur aberrante (40) occasionnant le déclenchement d'un signal d'alarme lorsque celle-ci n'est pas située entre les valeurs limites supérieure ou inférieure fixées.

8. Moteur ou compresseur selon l'une des revendications 3 à 6 caractérisé en ce que l'électronique de traitement calcule à chaque instant la valeur moyenne des valeurs de pointe mémorisées au travers de tous les cycles et fixent des valeurs limites ajustables et qu'en outre, elle identifie immédiatement une valeur aberrante, l'affiche resp. déclenche des signaux d'alarme.

9. Moteur ou compresseur selon l'une des revendications précédentes caractérisé en ce que les jeux de critaux piéziques sont réalisés en silicium et qu'à la place de l'effet piézo-électrique ils utilisent la variation de la résistance électrique ou de la capacité pour la saisie du signal.
